# EUROPEAN PATENT APPLICATION

(11) **EP 3 534 511 A1**
(43) Date of publication of application: **04.09.2019**
(21) Application number: 18159483.9
(22) Date of filing: 01.03.2018
(51) Int. Cl.: H02K 15/00, H02K 15/06, H02K 15/10

(54) **METHOD FOR REPLACING A CONDUCTIVE BAR OF A STATOR WINDING**

(71) Applicant: Siemens Aktiengesellschaft, 80333 München (DE)
(72) Inventor: Staubach, Christian, 45768 Marl (DE); Mashkin, Andrey, 50672 Köln (DE); Pohlmann, Friedhelm, 45355 Essen (DE)

(57) **Abstract**

The invention refers to a method for replacing a conductive bar (3) of a stator winding (1) of an electric machine (2), said stator winding (1) comprising a multiplicity of insulated bars (3) each having central straight portion (5) and two end winding involute areas (6) all being covered with a rigid insulation (7), wherein the bars (3) are connected to each other at their end winding involute areas (6).

## Description

The present invention relates to a method for replacing a conductive bar of a stator winding of an electric machine, said stator winding comprising a multiplicity of insulated bars each having central straight portion and two end winding involute areas all being covered with a rigid insulation, wherein the bars are connected to each other at their end winding involute areas.

Turbo-generators are intended to operate for decades without any need to replace major elements of the stator winding. The stator winding comprises a multiplicity of insulated bars received in stator grooves of the stator core, each bar having a central straight portion and two end winding involute areas, wherein the bars are connected to each other at their end winding involute areas.

For the operation of a turbo-generator it is of great importance that the bars are well-bonded to each other and to the stator core to harmonize their mechanical and dynamic-mechanical behavior. In order to achieve such a strong bond many stators are manufactured according to the so called Globally Vacuum Pressure Impregnation (GVPI) Technology. In a first step the bars of the stator are manufactured and insulated by dry insulation tape and some conductive tapes. Thereafter, the central straight portions of the bars are inserted in the stator grooves. In order to achieve a so called two-layer stator winding two bars are inserted in each groove, namely first a bottom layer bar and then a top layer bar. Next, the bars are assembled to a three phase winding. To connect bars in three electrical coils, the end portions of the bars projecting from the grooves are formed in involute shapes, which are subsequently referred to as end winding involute areas, whereas the end winding involute areas of the top layer bars are oriented cross to the ones of the bottom layer bars. In order to assure a strong resistance against vibration and electrodynamic forces the end winding involute areas are fixed to end winding support elements like support rings, braces, spacers, etc. Subsequent to the mechanical installation of the whole winding the assembly is placed in a GVPI tank and impregnated with resin. After baking all straight portions of the bars are glued to the groove walls, whereas all support structures are glued to the end winding involute areas of the bars.

If the winding insulation is damaged on site, an in-situ repair is normally possible. In some cases, a stator winding bar replacement is needed during repair work, e.g. if the damage is located within the groove and is therefore not accessible, or if the damage of a bar is such severe that a replacement becomes reasonable.

A current method for replacing a conductive bar of a stator winding of an electric machine comprises the steps of disconnecting the end winding involute areas of the bar to be replaced from the ones of neighboring bars by detaching the end winding support elements and removing said bar from the stator core; providing a replacement bar dimensioned in accordance with the bar removed, wherein the replacement bar is completely covered with a rigid insulation along its straight portion and its end winding involute areas; and arranging and fixing the replacement bar in the stator groove and connecting its end winding involute areas with the ones of the neighboring bars.

Due to the tight end-winding structure of known stator windings with little clearances between the end winding involute areas of neighboring bars and due to the geometrical shape of the bars it is often necessary to lift neighboring bars in addition to the one to be replaced for the disassembly and assembly work, even if the bar to be replaced is a top layer bar. Especially in case of GVPI-type generators this is very challenging due to the fact that the straight portions of the bars are well glued to the walls of the grooves. Lots of glued portions are destroyed during such lifting operations and have to be re-glued during the reassembly, which has a significant impact on the mechanical and dynamic-mechanical behavior of these portions. Furthermore, in particular the end winding involute areas of the replacement bar and of the neighboring bars are exposed to high mechanical stresses during the insertion and re-connection works, which are caused by bending forces applied during the installation and fitting process. These mechanical stresses can mechanically damage the rigid insulation, what may result in accelerated deterioration of the stator winding during operation. For a replacement of a bottom layer bar even more disassembly and reassembly work is required. All top layer bars, whose end winding involute areas are covering the ones of the damaged bottom layer bar, need to be disconnected and removed in order make the damaged bottom layer bar accessible. This additional disassembly of the top layer bars not only does increase the amount of work but also has a more severe impact on the consolidation of the bars in the end winding. A significant number of originally glued elements will be destroyed and has to be re-glued. This has a strong impact on their mechanical and dynamic-mechanical behavior. In addition, the disassembly of a bottom layer bar may also require the removal or lifting of neighboring bottom layer bars as described before in connection with the removal of a top layer bar.

Starting form this prior art it is an object of the present invention to provide an alternative method of the above-mentioned kind for replacing a conductive bar of a stator winding of an electric machine.

In order to solve this object the present invention provides a method of the above-mentioned kind comprising the steps: a) disconnecting the end winding involute areas of the bar to be replaced from the ones of neighboring bars and removing said bar from the stator winding; b) providing a replacement bar dimensioned in accordance with the bar removed in step a), wherein the replacement bar is covered with a rigid insulation at its straight portion, whereas at least the greater part of each end winding involute area is not covered with a rigid insulation; and c) arranging and fixing the replacement bar in the stator winding and connecting its end winding involute areas with the ones of the neighboring bars.

According to the method of the present invention, the end winding involute areas of the bar to be replaced are disconnected in step a) from the ones of neighboring bars, whereupon said bar is removed from the stator core. As it is known from prior art the disconnection normally comprises the detachment of end winding support elements, slot wedges etc. In step b) a replacement bar dimensioned in accordance with the bar removed in step a) is provided. However, in contrast to prior art the replacement bar is not covered with a rigid insulation at its end winding involute areas, i.e. no hardened, thermoset or cured insulation is present on the end winding involute areas. Thus, the flexibility of the end winding involute areas of the replacement bar is very high. Accordingly, the risk of damaging the end winding involute areas of the replacement bar as well as of neighboring bars is significantly reduced during the arranging and fixing works of the replacement bar in step c). Nevertheless the insulation of the straight portion of the replacement bar, which is exposed to the highest electrical stresses during the operation of the stator winding, can still be produced with highest quality during the manufacture of the replacement bar and can also be tested before shipment to repair site. One further advantage of providing a replacement bar in step b) having no or at least no rigid insulation on its end winding involute areas is that more clearance to the end winding involute areas of neighboring bars is present. Thus, it is easier to perform step c) because more working space is available. Please note that due to the geometrical shape of the neighboring bars and/or due to the position of the damaged bar it may be necessary to lift additional neighboring bars in step a) in order to be able to remove the damaged bar, and to overwork lifted bars after performing step c). However, even in this case the lifting of at least some additional neighboring bars can be prevented thanks to the extra flexibility of and the extra working space provided by the end winding involute areas of the replacement bars.

According to one aspect of the method according to the present invention the end winding involute areas of the replacement bar are provided with a shrinkable and thermosetting hose being heated and cured after executing step c) in order to provide the end winding involute areas of the replacement bar with a rigid insulation. The thermosetting hose can be arranged prior to or after executing step c).

According to another aspect of the method according to the present invention the end winding involute areas of the replacement bar may be provided with a wet insulation, such as a resin impregnated tape, being cured after executing step c) in order to provide the end winding involute areas of the replacement bar with a rigid insulation. The wet insulation can be arranged prior to or after executing step c).

As already mentioned, in both cases the non-rigid insulations of the end winding involute areas of the replacement bar can already be present in step b) and consequently also when executing step c). In this case at least the desired flexibility of the end winding involute areas is guaranteed while performing step c) because the thermosetting or curing of said non-rigid insulation is induced after step c). Alternatively, the hose as well as the wet insulation can be fixed to the end winding involute areas of the replacement bar after step c) and then be thermoset or cured. This proceeding has the advantage that more clearance between the end winding involute areas of the replacement bar and the ones of neighboring bars and thus more working space is present while performing step c) .

Preferably, the replacement bar is composed of several non-consolidated or partially consolidated strands, wherein the clearances between the single partially consolidated strands should extend in the horizontal direction, if needed also in the vertical direction. This will further increase the flexibility of the end winding involute areas of the replacement bar, which is important for the execution of step c).

Advantageously, the strands are held together by a fixture allowing a relative movement between the strands. This facilitates the handling of the replacement bar. The fixture may be provided in the form of a bandage. Alternatively, the fixture can be provided in the form of a thermally shrinkable and thermosetting hose as described before.

According to one aspect of the method of the present invention the stator winding is of a two-layer stator winding design comprising bottom layer bars and top layer bars, wherein the straight portion of one bottom layer bar and the straight portion of one top layer bar are arranged in a common stator groove of the stator core at a time and wherein both end winding involute areas of a bottom layer bar are connected to the ones of top layer bars and vice versa.

Further features and advantages of the present invention will become apparent from the following description of a method according to one embodiment of the present invention with reference to the accompanying drawing. In the drawing
- Figure 1: is a perspective view of a part of a stator winding of an electric machine;
- Figure 2: is a schematic perspective view of a single bar of the stator winding shown in figure 1;
- Figure 3: is an enlarged view of detail III in figure 2 showing a part of an end winding involute area, whereas a part of an insulation is omitted;
- Figure 4: is a schematic perspective view of four bars of the stator winding shown in figure 1;
- Figure 5: is a sectional view showing a top layer bar and a bottom layer bar arranged in a common stator groove of the stator core of the stator winding shown in figure 1;
- Figure 6: is a schematic perspective view showing the geometrical shape and the orientation of several neighboring bars;
- Figure 7: is a diagram showing method steps of a method according to an embodiment of the present invention;
- Figure 8: is an enlarged view as figure 3 showing the end winding involute area of a replacement bar in accordance with the present invention;
- Figure 9: is a front view of the end winding involute area of the replacement bar shown in figure 8;
- Figure 10: is a front view of the end winding involute area of an alternative replacement bar in accordance with the present invention;
- Figure 11: is a front view of the end winding involute area of another alternative replacement bar in accordance with the present invention;
- Figure 12: is a perspective view of a part of the end winding involute area of a replacement bar shown in figure 11 whose strands are held together by a first fixture; and
- Figure 13: is a front view of the end winding involute area of a replacement bar shown in figure 11 whose strands are held together by a second fixture.

In the following same reference numerals denote same or similar components.

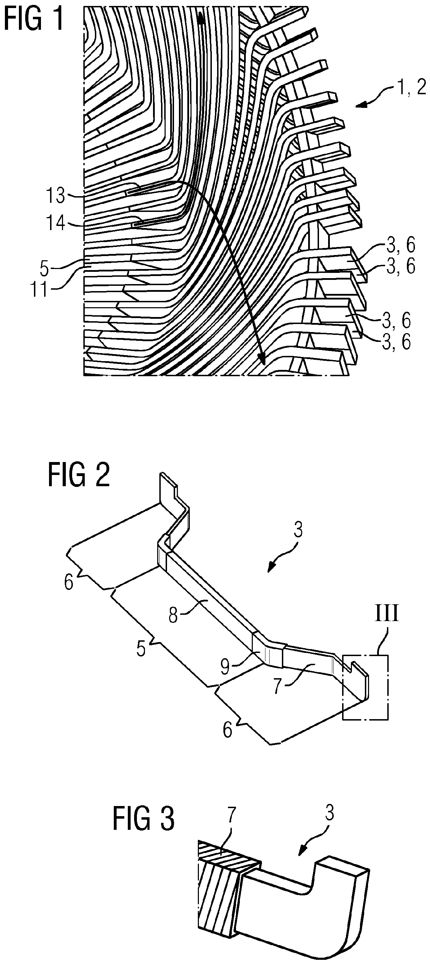

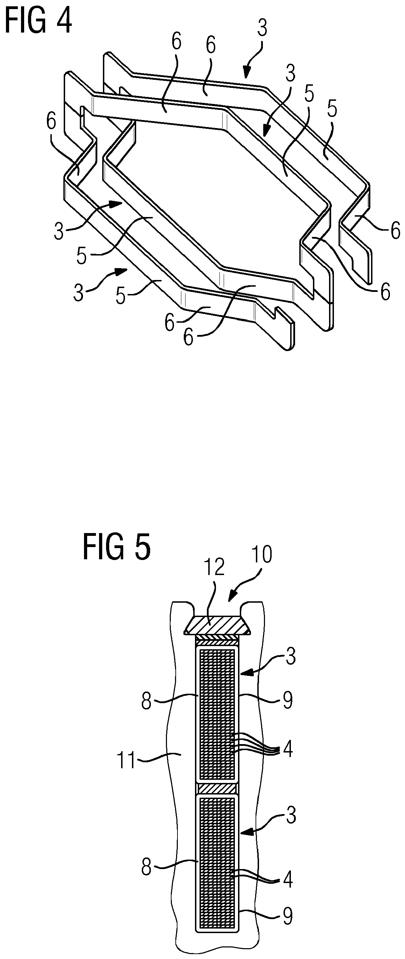

Figures 1 to 6 show parts of a stator winding 1 of an electrical machine 2. The stator winding 1 comprises a plurality of bars 3. With reference to figures 2 and 3 each bar 3 is made of a plurality of fully-consolidated strands 4 and comprises a central straight portion 5 and two end winding involute areas 6 all being covered with rigid insulation 7 presently formed by a dry insulation tape. The central straight portion 5 is covered by an outer corona protection 8 and the transition areas between the central straight portion 5 and the two end winding involute areas 6 are covered by an end corona protection 9, both being formed by a conductive tape. The central straight portions 5 of the bars 3 are inserted in stator grooves 10 formed in a ring-shaped stator core 11. In order to achieve a so-called two-layer stator winding two bars 3 are inserted in each stator groove 10, namely first a bottom layer bar 3a and then a top layer bar 3b, and then fixed by means of a wedge 12. The bars 3 are assembled to a three phase winding. To connect the bars 3 in e.g. three electrical coils, the end winding involute areas 6 of the bottom layer bars 3a are oriented cross to the ones of the top layer bars 3b as shown by arrows 13 and 14 in figure 1, wherein both end winding involute areas 6 of each bottom layer bar 3a are connected to the ones of top layer bars 3b and vice versa. The electrical connection is realized by series connector plates located at the outerboard ends of the end winding involute areas 6 of the bars 3 to be connected. The end winding involute areas 6 of the bars 3 to be connected are mechanically fastened to each other by end winding support elements (not shown) like support rings, braces, spacers, etc. in order to provide enough stiffness against operational and short circuit related mechanical load. The whole stator winding 1 is impregnated with resin in accordance with the GVPI technology.

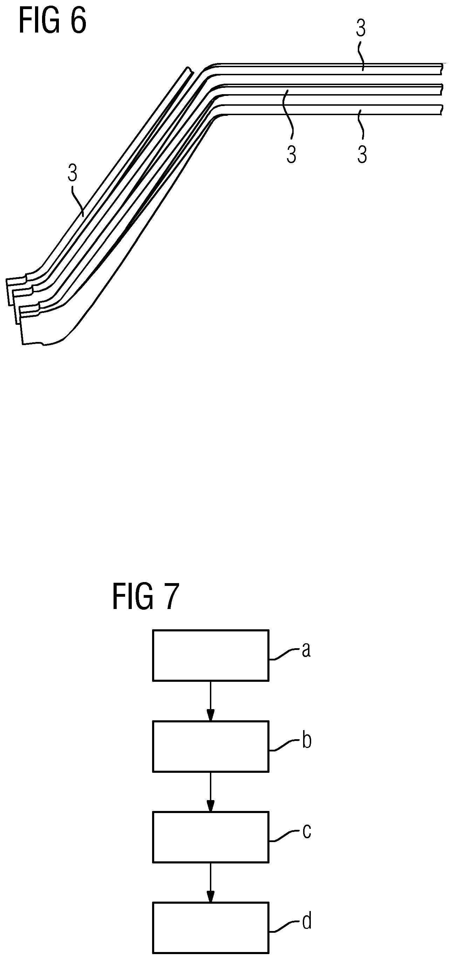

If the winding insulation is damaged on site, an in-situ repair has to be performed by removing damaged bars 3 and replacing them by new bars 3. Against this background the present invention proposes a method for replacing a conductive bar 3 of the stator winding 1. A method according to an embodiment of the present invention is schematically shown in figure 7.

In a first step a) the end winding involute areas 6 of a damaged bar 3 are disconnected from the ones of neighboring bars 3 and removed from the stator core 11. The disconnecting comprises the detachment of end winding support elements, slot wedges etc. In addition, neighboring bars 3 may need to be lifted in order to gain access to the damaged bar 3 due to the tight end-winding structure and the geometrical shape of the bars 3 as shown in figure 6. If the damaged bar 3 is a bottom layer bar 3a, it may also be necessary to remove at least some top layer bars 3b covering the damaged one.

In a second step b) a replacement bar 15 is provided. The dimensions and the structure of the replacement bar 15 essentially correspond to the ones of the bar 3 shown in figures 2 and 3. However, in contrast to the bar 3 the replacement bar 15 is not covered with a rigid insulation 7 at its end winding involute areas 6, i.e. the replacement bar 15 is not covered with a hardened, thermoset or cured insulation along its end winding involute areas 6. In the present case, the end winding involute areas 6 of the replacement bar 15 are not provided with any insulation. Thus, the flexibility of the end winding involute areas 6 of the replacement bar 15 is much higher than the one of the end winding involute areas 6 of the bars 3.

In a third step c) the replacement bar 15 is arranged in its dedicated stator groove 10. Moreover, its end winding involute areas 6 are connected to the ones of the neighboring bars 3. Thanks to the high flexibility of the end winding involute areas 6 of the replacement bar 15 the risk of damaging the end winding involute areas 6 of the replacement bar 15 as well of neighboring bars 3 is significantly reduced during the arranging and fixing works of the replacement bar 15 in step c). Nevertheless the insulation of the straight portion 5, which is produced during the manufacture of the replacement bar 15, still has a high and testable quality. A further advantage of providing a replacement bar 15 in step b) having end winding involute areas 6 with no insulation is that there remains a larger working space for performing step c).

Please note that, if additional bars 3 have been lifted or removed in step a), these additional bars 3 also need to be reinstalled in step b). Additional bars 3, which have been removed in step a), may also be replaced by replacement bars 15.

In a final step d) the end winding involute areas of all replacement bars 15 may be provided with an insulation, such as a wet insulation, which is then cured, or as a shrinkable hose 16, which is then thermoset by the application of heat.

Alternatively, the end winding involute areas 6 of all replacement bars 15 may be provided with a wet insulation tape, such as shown in figure 3 but not cured, or with a shrinkable and thermosetting hose prior to step c), wherein the wet insulation is cured or the thermosetting hose is thermoset after executing step c) in order to provide a rigid insulation of the end winding involute areas 6 of the replacement bar 15.

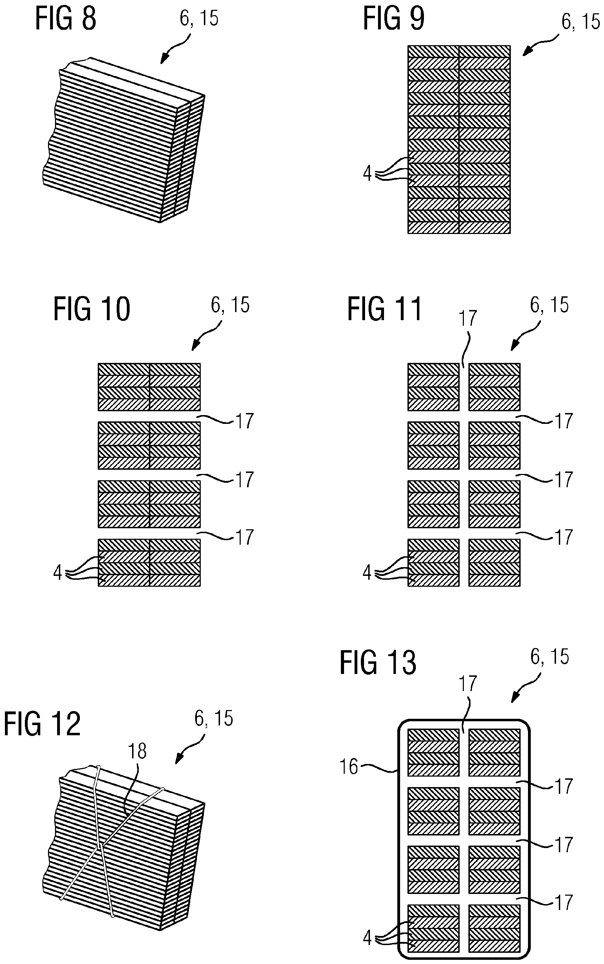

As shown in figure 9, the replacement bar 15 can consist of fully-consolidated strands 4. Alternatively, as shown in figures 10 and 11, the replacement bar 15 may also be composed of several partially consolidated strands 4, wherein the clearances 17 between the single partially consolidated strands 4 can extend in the horizontal direction as shown in figure 10 or in the horizontal as well as in the vertical direction as shown in figure 11. It is also possible to use a replacement bar 15 comprising non-consolidated strands 4 only. Non- or partially consolidated strands 4 are advantageous in that they further increase the flexibility of the end winding involute areas 6 of the replacement bar 15.

The partially consolidated strands 4 may be held together by a fixture allowing a relative movement between the strands 4. This facilitates the handling of the replacement bar 15. The fixture may be provided in the form of a bandage 18, as shown in figure 12. Alternatively, the fixture can be provided in the form of a thermally shrinkable and thermosetting hose 16. Such a hose 16 can form a flexible insulation, which can be hardened after performing step c) by the application of heat.

Even though the invention was described with reference to a specific embodiment a person skilled in the art will recognize that deviations are possible without departing from the scope of protection of the present invention as defined by the accompanying claims.

## Claims

1. Method for replacing a conductive bar (3) of a stator winding (1) of an electric machine (2), said stator winding (1) comprising a multiplicity of insulated bars (3) each having central straight portion (5) and two end winding involute areas (6) all being covered with a rigid insulation (7),
wherein the bars (3) are connected to each other at their end winding involute areas (6), the method comprising the steps:
a) disconnecting the end winding involute areas (6) of the bar (3) to be replaced from the ones of neighboring bars (3) and removing said bar (3) from the stator winding (1);
b) providing a replacement bar (15) dimensioned in accordance with the bar (3) removed in step a), wherein the replacement bar (15) is covered with a rigid insulation (7) at its straight portion (5), whereas at least the greater part of each end winding involute area (6) is not covered with a rigid insulation; and
c) arranging and fixing the replacement bar (15) in the stator winding (1) and connecting its end winding involute areas (6) with the ones of the neighboring bars (3).

2. Method according to claim 1,
**characterized in**
**that** the end winding involute areas (6) of the replacement bar (16) are provided with a shrinkable and thermosetting hose (16) being heated after executing step c).

3. Method according to claim 1,
**characterized in**
**that** the end winding involute areas (6) of the replacement bar (16) are provided with a wet insulation being cured after executing step c).

4. Method according to claim 3,
**characterized in**
**that** the wet insulation is provided in the form of a resin impregnated tape.

5. Method according to one of the foregoing claims,
**characterized in**
**that** the replacement bar (15) is composed of several non-consolidated or partially consolidated strands.

6. Method according to claim 5,
**characterized in**
**that** the strands are held together by a fixture allowing a relative movement between the strands.

7. Method according to one of the foregoing claims,
**characterized in**
**that** the stator winding is of a two-layer stator winding design comprising bottom layer bars and top layer bars, wherein the straight portion of one bottom layer bar and the straight portion of one top layer bar are arranged in a common stator groove of the stator core at a time, and wherein both end winding involute areas of a bottom layer bar are connected to the ones of top layer bars and vice versa.
